# EUROPEAN PATENT SPECIFICATION

(11) **EP 0 939 111 B1**
(45) Date of publication and mention of the grant of the patent: **28.01.2004**
(21) Application number: 98103364.0
(22) Date of filing: 26.02.1998
(51) Int. Cl.: C09D 163/00, C09D 5/10

(54) **Iron base coating, surface treatment method for iron base, or surface treatment method for fastening part**
Beschichtetes Eisen, Verfahren zur Oberflächenbehandlung von Eisen oder ein Verfahren zur Oberflächenbehandlung von Befestigungsteilen
Fer revêtu, procédé de traitement de surface de fer ou procédé de traitement de surface de pièces de fixation

(43) Date of publication of application: 01.09.1999
(73) Proprietor: Tsubakimoto Chain Co., Osaka 530-0018, (JP); Nihon Ruspert Co., Ltd., Kishiwada-shi, Osaka-fu (JP)
(72) Inventor: Homi, Makoto, Itami-shi, Hyogo-ken (JP)
(74) Representative: Maisch, Thomas, Dr. rer. nat.

(56) References cited:
- WO-A-92/11324
- WO-A-96/29372
- DE-A- 2 227 188
- US-A- 4 162 244
- US-A- 5 384 345
- PATENT ABSTRACTS OF JAPAN vol. 005, no. 184 (C-080), 21 November 1981 & JP 56 109261 A (NIPPON ZEON CO LTD;OTHERS: 01), 29 August 1981,

## Description

### [Detailed Description of the Invention]

### [Technical Field of the Invention]

This invention relates to an iron base coating, to a surface treatment method for iron base intended to prevent the corrosion of a fastening part such as bolt, nut, washer, drill screw, tapping screw or the like and to a surface treatment method for fastening part.

### [Prior Arts]

In corrosion treatment for fastening part, galvanization or galvanization followed by chromating which is highly preservative and inexpensive is most generally adapted. In order to prevent the occurence of self-corrosion (basic carbonate) of galvanization to improve corrosion resistance and also to finish a fastening part to the same color as a body to which the fastening part is applied, nowadays, painting is performed on the chromated surface.

The galvanized fastening part as described above has a problem of delayed cracking by hydrogen embrittlement. In the galvanizing process, infiltration of hydrogen to steel in pickling, plating and chromating steps is inevitable.

To solve this problem, in recent years, a surface treatment method comprising undercoating the iron base of a fastening part with a zinc dust-contained epoxy resin coating after degreasing and blasting it without plating, and applying a coating excellent in durability thereon as finish coat is attempted.

In the surface treatment only with coatings as described above, the film thickness is difficult to control in painting, a necessary film thickness is hardly provided, particularly, on an edge part such as thread. Thus, this method is effective in the point that a fastening part free from hydrogen embrittlement can be provided, but can not provide a sufficiently satisfactory performance to corrosion resistance.

Therefore, in order to further improve the corrosion resistance and durability from such a viewpoint, the present inventors tried to improve the zinc dust-contained epoxy resin coating into a composition having good painting property as a sufficient thickness can be also provided even in the edge part such as thread.

From WO-A-92 11 324 is obtainable an anti-corrosive coating composition comprising a curable binder, e.g. an epoxy resin, zinc dust and expanded polymer microspheres still containing a blowing agent. The composition is especially useful as coating of iron or steel. Products for improving the adhesion can also be added. In a useful form the composition contains 0.05 to 6 wt% expanded polymer parts, calculated on the total wt% of the composition before curing.

From JP-A-56109261 is obtainable an expansion type rust-inhibiting material containing an epoxy resin, an acid anhydride hardener, an amine hardener, a curing accelerator, a blowing agent, a diluent for the epoxy resin and an electrically conductive powder as essential components.

US-A-4 162 244 is showing weldable coatings containing an electro-conductive pigment such as zinc, an epoxy resin binder and solvent.

WO-A-96 29 372 discloses an anti-corrosive protective coating composition comprising a curable binder, e. g. a bisphenol epoxy resin, zinc dust, graphite powder and hollow glass microspheres.

### [Problem to be Solved by the Invention]

Thus, this invention has an object to solve the problems of the surface treatment method for fastening part comprising undercoating the iron base of a fastening part with a zinc dust-contained epoxy resin coating excellent in corrosion resistance after degreasing and blasting it without plating, and applying a coating excellent in durability thereto as finish coat, whereby a fastening part excellent in corrosion resistance and durability is provided by an improved surface treatment method in which the edge covering property of the zinc dust-contained epoxy resin coating is enhanced while holding the corrosion resistance naturally possessed by the zinc dust-contained epoxy resin coating.

### [Means to Solve the Problems]

Namely, this invention involves a surface treatment method for fastening part comprising undercoating the iron base of a fastening part with a zinc dust-contained epoxy resin coating after degreasing and blasting it, and applying another coating thereon as finish coat, in which a composition containing 20-200 parts by weight of zinc dust and 0.05-0.5 parts by weight of a thermally expanding powder to 10 parts by weight of a vehicle mainly composed of epoxy resin, and 0.2-2.5 parts by weight of an epoxy type silane coupling agent to 100 parts by weight of the zinc powder is used as the zinc-dust contained epoxy resin coating.

### [Preferred Embodiments of the Invention]

The preferred embodiments of this invention are then described below.

To paint a fastening part, spray coating, dip coating, dip spin coating of scattering an excessive coating by rotating centrifugal force after impregnation are employed, and the dip spin coating capable of relatively equalizing the film thickness without coating unevenness is most generally used among them as the painting method for fastening part.

In each of the painting methods, the paint film is hardly adhered to an edge part because of the surface tension, and a baking type paint, particularly, shows this tendency more remarkably. As the zinc dust-contained epoxy resin coating for fastening part, baking type is generally used, and it is a significant subject how thickly the pain film is adhered to the edge part to hold the natural corrosion preventing performance of the coating.

A zinc dust-contained epoxy resin coating according to this invention, which can solve this subject, is formed of a composition containing 20-200 parts by weight of zinc dust and 0.05-0.5 parts by weight of a thermally expanding powder to 10 parts by weight of a vehicle mainly composed of epoxy resin, and 0.2-2.5 parts by weight of an epoxy type silane coupling agent to 100 parts by weight of the zinc dust.

The vehicle mainly composed of epoxy resin is formed of a bisphenol type epoxy resin and one hardener selected from polyamine, polyamide, and amino resin, or two or more of them, and the mixing ratio of bisphenol epoxy resin to harder is not particularly limited since it can be largely varied according to the combination.

As the bisphenol epoxy resin, for example, EPOTOHTO YD-134 EPOTOHTO YD-011, EPOTOHTO YD-014, and EPOTOHTO YD-017 (trade names manufactured by Toto Kasei Co., Ltd.), EPIKOTE #834, EPIKOTE #1001, and EPIKOTE #1007 (trade names manufactured by Yuka Shell Epoxy Co., Ltd.), which have epoxy equivalents of 230-2100, are preferably used. They may be used alone or in combination of two or more of them.

As the hardener, for example, FUJICURE 6300 and FUJICURE FXR-1030 (trade names manufactured by Fuji Kasei Kogyo Co., Ltd.) and SUMICURE S (trade name manufactured by Sumitomo Chemical Co., Ltd.) which are polyamines; TOMIDE 210 (trade name manufactured by Fuji Kasei Kogyo Co., Ltd.) which is polyamide; DICYANEX-200 (trade name manufactured by ACI Japan Ltd.) which is dicyandiamide; OMICURE 94 (trade name manufactured by ACI Japan Ltd.) and Uban SE-60 (trade name manufactured by Mitsui Toatsu Chemicals, Inc.) which are amino resins, and the like are preferably used. These can be used alone or in combination of two or more of them.

The zinc dust used in the zinc dust-contained epoxy resin coating according to this invention preferably has an average particle size of 3-8 µm. The zinc dust is slightly inferior in corrosion resistance with less than 3 µm, and easily settled to interfere with storage stability of coating with 8 µm.

The addition ratio of the zinc dust is set to 20-200 parts by weight, preferably 30-90 parts by weight, to 10 parts by weight of the vehicle mainly composed of epoxy resin.

When the addition ratio is less than 20 parts by weight, sacrifice corrosion preventing function of zinc is not sufficiently exhibited, and when it exceeds 200 parts by weight, physical property of paint film, painting property, and storage stability of coating are adversely affected.

The thermally expanding powder used in this invention is further illustrated.

The prevent inventors found that a small quantity of a certain thermally expanding powder is added to a zinc dust-contained epoxy resin coating which is an under coat for fastening part, and the resulting coating is applied to a fastening part by dip coating or dip spin coating followed by baking, whereby a fastening part remarkably improved in corrosion preventing property, compared with the one having no additive, can be provided.

The reason for this will be that the paint film is laid in porous state by the expansion of the thermally expanding powder in paint film baking to increase the surface area of the paint film containing the zinc dust, and the sacrifice corrosion preventing effect on iron base of zinc by ionization tendency is consequently enhanced. This effect is more remarkable in a thin film part such as edge part.

The thermally expanding powder used in this invention is a thermally expanding micro capsule having low boiling point hydrocarbon involved in a highly solvent-resisting shell wall, which never hinder the storage stability in coating. Although azo and OBSH (benzenesulfonylhydrazide) thermally expanding powders are also effective, they have an unpreferable problem of storage stability in coating, which makes it difficult to attain the object of this invention.

The thermally expanding powder preferably has a particle size of 50 µ m or less, and with exceeding 50 µm, the smoothness of the paint film is deteriorated. The expanding temperature of the thermally expanding powder must be reasonably set within the baking temperature of the coating, and a maximum expansion magnification (volume) of 10 times or more is preferred. As the thermally expanding powder, for example, P-17, P-18, P-19 (trade names manufactured by Dainichi Seika Colour & Chemicals Mfg. Co., Ltd.) are preferably used.

The addition ratio of the thermally expanding powder in the zinc dust-contained epoxy resin coating according to this invention is needed to be within the range of 0.05-0.5 parts by weight to 10 parts by weight of the vehicle mainly composed of epoxy resin. When the addition ratio is less than 0.05 parts by weight, the paint film is hardly made porous, and an expected corrosion preventing effect can not be provided. When the addition ratio exceeds 0.5 parts by weight, the pore diameter becomes too large, so that the corrosion preventing property is reduced, and dot rust is easily developed.

The epoxy type silane coupling agent is formed of γ-glycidoxypropyltrimethoxysilane or γ-glycidoxypropylmethyldiethoxysilane, and, for example, KBM 403 and KBE 402 (trade names manufactured by Sin-Etsu Chemical Co., Ltd.) and SH 6040 (trade name manufactured by Dow Corning Toray Silicone Co., Ltd.) are preferably used.

The prevent inventors found that corrosion preventing property and dip spin coating property can be improved by adding the epoxy type silane coupling agent to a zinc dust-contained epoxy resin coating. This reason is supposed that the silane coupling agent chemically bonds the vehicle mainly composed of epoxy resin to the zinc dust, and also chemically bonds it to the iron base.

The addition ratio of the silane coupling agent in the zinc dust-contained epoxy resin coating according to this invention is needed to be within the range of 0.2-2.5 parts by weight to 100 parts by weight of the zinc dust. The addition ratios less than 0.2 parts by weight and exceeding 2.5 parts by weight makes it difficult to attain the object of this invention.

To the composition of the zinc dust-contained epoxy resin paint of this invention, resins other than epoxy such as phenoxy resin, acrylic resin, alkyd resin, polyurethane resin, silicone resin, petroleum resin, butyral resin, rosin, and the like; extenders such as talc, barium sulfide, mica, calcium carbonate, and the like; colored pigments such as titanium oxide, zinc oxide, chrome yellow, chromium oxide, iron oxide, carbon black, aluminum powder and the like; reinforcing materials such as glass fiber, glass flake, mica, aluminum flake, asbestos, synthetic silica and the like; and other additives generally used in paint such as thickener, preservative, settlement preventing agent, accelerator, and the like may be added as occasion demands.

To solve or disperse the resin, a necessary quantity of a known solvent of aromatic hydrocarbon, aliphatic hydrocarbon, ester, ether, ketone, alcohol and the like may be reasonably used as occasion demands.

The thus-obtained zinc dust-contained epoxy resin coating is applied to an iron base, after degreasing and blasting it, as under coat for fastening part by means of dip spin, impregnation, spray, brushing or the like so as to have a dried film thickness of about 10-30 µ.

The resulting iron base is successively heated and dried at about 100-250°C, whereby the undercoating is finished.

The overcoat in the surface treatment method for fastening part according to this invention is then illustrated.

On the paint film by the zinc dust-contained epoxy resin coating, another coating is applied as finish coat to finally finish the surface treatment. This overcoat is used with an intention of the further improvement in corrosion preventing property, improvement in durability such as acid resistance, alkali resistance and weather resistance, imparting of functions such as wear resistance and slidability, or designated color finishing of a fastening part with the same color as a body to which the fastening part is applied.

As the overcoat used in this invention, for example, various coatings such as epoxy resin coating, tar epoxy resin coating, polyurethane resin coating, alkyd resin coating, acrylic resin coating, acrylic silicone resin coating, silicone resin coating, fluorine resin coating, and the like may be used, and in each case, a baking type coating is preferred from the viewpoint of working process.

### [Effect of the Invention]

According to the surface treatment by this method, a fastening part excellent in corrosion resistance and durability and free from delayed cracking by hydrogen embrittlement can be provided.

### [Embodiments]

This invention is further illustrated in more detail in reference to preferred embodiments.

In Tables 1, 2, and 3, EPOTOHTOYD-011 and EPOTOHTOYD-014 are trade names of epoxy resins manufactured by Toto Kasei Co., Ltd. (epoxy equivalents of 450-500, 900-1000), FUJICURE-6300 and TOMIDE 210 are trade names of polyamine and polyamide manufactured by Fuji Kasei Kogyo Co., Ltd., DICYANEX-200 and OMICURE-94 are trade names of dicyandiamide and amino resin manufactured by ACI Japan Ltd.

In Tables 1, 2, and 3, also, F-1000 is the trade name of zinc dust (average particle size: 4.9±0.3 µm) manufactured by The Honjo-Chemical Corporation P-17 is the trade name of a thermally expanding powder (particle size: 15-200 µ) manufactured by Dainichi Seika Colour & Chemicals Mfg. Co., Ltd.), and SH6040 is the trademark of a silane coupling agent manufactured by Dow Corning Toray Silicone Co., Ltd.).

Further, in Tables 1, 2, and 3, DISVALON #6900-20X is the trade name of a settlement preventing agent manufactured by Kusumoto Chemicals Ltd.

Variously blended coating compositions shown in Tables 1, 2, and 3 (Examples 1-18 and Comparative Examples 1-9) were dispersed by a sand mill, and regulated in viscosity with diluting thinner (a mixture of 40 parts by weight of xylene, 30 parts by weight of ethyl cellosolve, and 30 parts by weight of IPA) so as to have a viscosity of 20 ± 2 sec/20°C by IHS DK-2 cup, and the resulting compositions were sandblasted (sand coarse: #100), and applied to a steel bolt (M 12x50) degreased by xylene twice by dip spin coating.

The spin coating was performed at a circumferential speed of 640 m/min (1700 rpm), and the baking of the coating was performed in 2-coat/2-bake for 30 minutes at 170°C. The thus-obtained various sample bolts (N=4) were subjected to salt spray test by JIS Z 237, and the results are shown in Tables 1, 2, and 3.

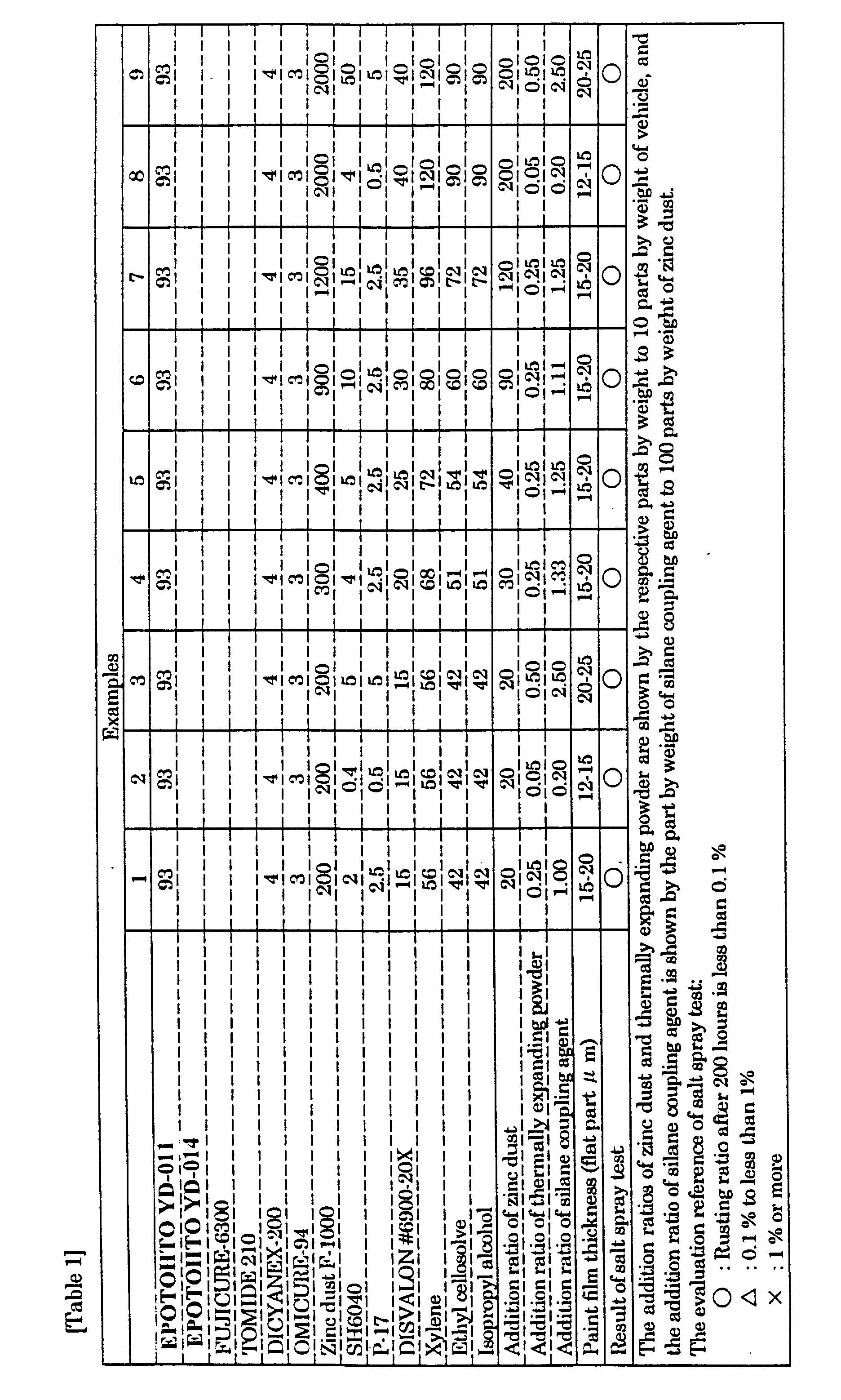

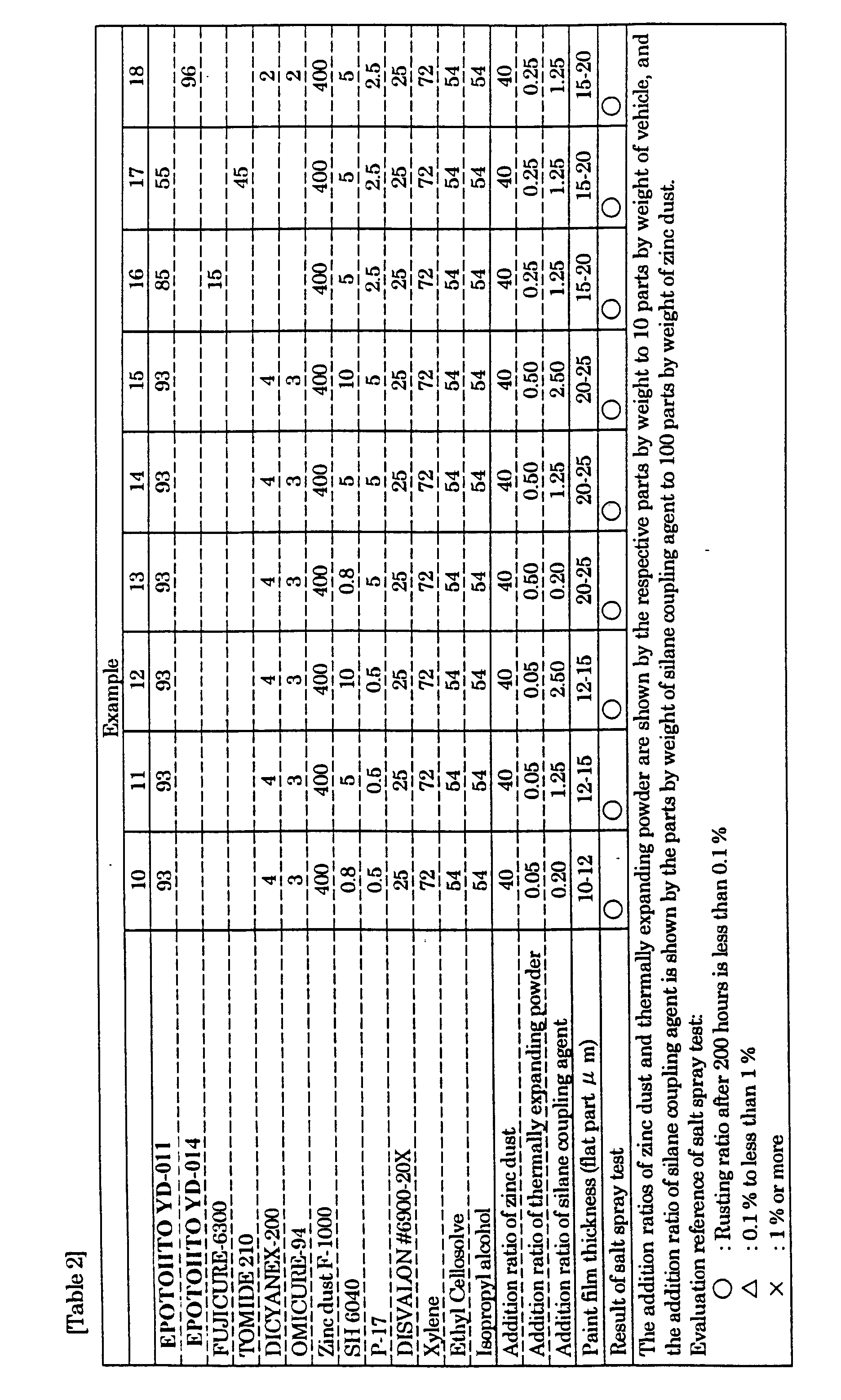

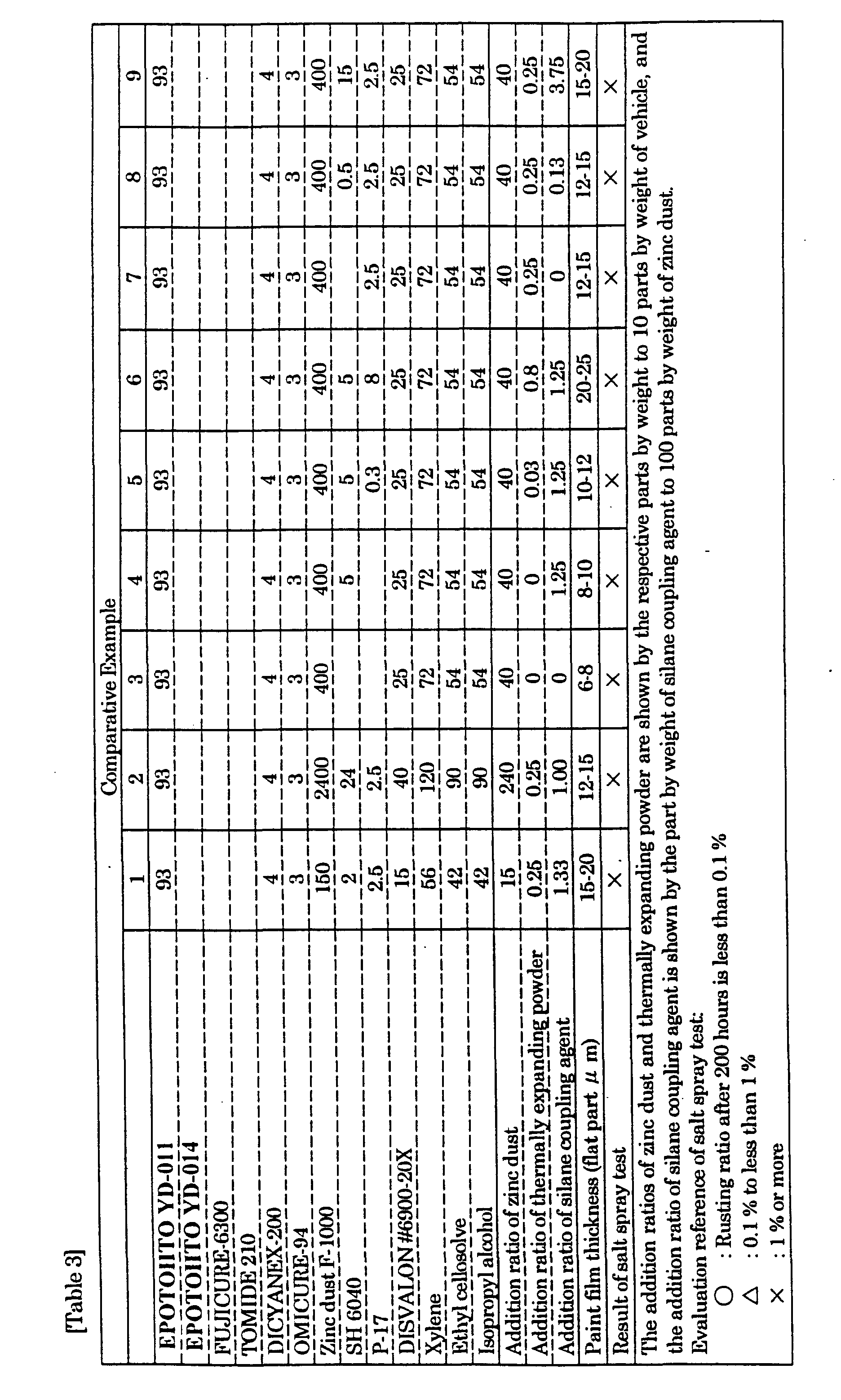

## Claims

1. An iron base coating which comprises a zinc dust-contained epoxy resin coating for undercoating an iron base after degreasing and blasting it, the zinc dust-contained epoxy resin coating being formed of a composition containing 20-200 parts by weight of zinc dust and 0.05-0.5 parts by weight of a thermally expanding powder to 10 parts by weight of a vehicle mainly composed of epoxy resin, and 0.2-2.5 parts by weight of an epoxy type silane coupling agent to 100 parts by weight of the zinc dust.

2. A surface treatment method for iron base which comprises undercoating an iron base with a zinc dust-contained epoxy resin coating after degreasing and blasting it, and then applying another coating thereto as finish coat, the zinc dust-contained epoxy resin coating being formed of a composition containing 20-200 parts by weight of zinc dust and 0.05-0.5 parts by weight of a thermal expanding powder to 10 parts by weight of a vehicle mainly composed of epoxy resin, and 0.2-2.5 parts by weight of an epoxy type silane coupling agent to 100 parts by weight of the zinc dust.

3. A surface treatment method for fastening part which comprise undercoating the iron base of a fastening part with a zinc dust-contained epoxy resin coating after degreasing and blasting it, and then applying another coating thereto as finish coat, the zinc dust-contained epoxy resin paint being formed of a composition containing 20-200 parts by weight of zinc dust and 0.05-0.5 parts by weight of a thermally expanding powder to 10 parts by weight of a vehicle mainly composed of epoxy resin, and 0.2-2.5 parts by weight of an epoxy type silane coupling agent to 100 parts by weight of the zinc dust.

## Patentansprüche

1. Eisensubstratbeschichtung, die eine Zinkstaub enthaltende Epoxydharz-beschichtung zum Grundieren eines Eisensubstrats umfasst, nachdem es entfettet und gestrahlt worden ist, wobei die Zinkstaub enthaltende Epoxydharzbeschichtung aus einer Zusammensetzung gebildet ist, die 20-200 Gewichtsanteile an Zinkstaub und 0,05-0,5 Gewichtsanteile eines thermisch expandierenden Pulvers auf 10 Gewichtsanteile eines hauptsächlich aus Epoxydharz bestehenden Vehikels sowie 0,2-2,5 Gewichtsanteile eines Silan-Kopplungsmittels vom Epoxy-Typ auf 100 Gewichtsanteile des Zinkstaubs enthält.

2. Oberflächenbehandlungsverfahren für ein Eisensubstrat, umfassend das Grundieren eines Eisensubstrats mit einer Zinkstaub enthaltenden Epoxydharzbeschichtung, nachdem es entfettet und gestrahlt worden ist, und sodann das Aufbringen einer anderen Beschichtung darauf als Endbeschichtung, wobei die Zinkstaub enthaltende Epoxydharzbeschichtung aus einer Zusammensetzung gebildet ist, die 20-200 Gewichtsanteile an Zinkstaub und 0,05-0,5 Gewichtsanteile eines thermisch expandierenden Pulvers auf 10 Gewichtsanteile eines hauptsächlich aus Epoxydharz bestehenden Vehikels sowie 0,2-2,5 Gewichtsanteile eines Silan-Kopplungsmittels vom Epoxy-Typ auf 100 Gewichtsanteile des Zinkstaubs enthält.

3. Oberflächenbehandlungsverfahren für ein Befestigungselement, umfassend das Grundieren des Eisensubstrats eines Befestigungselements mit einer Zinkstaub enthaltenden Epoxydharzbeschichtung, nachdem es entfettet und gestrahlt worden ist, und sodann das Aufbringen einer anderen Beschichtung darauf als Endbeschichtung, wobei der Zinkstaub enthaltende Epoxydharzauftrag aus einer Zusammensetzung gebildet ist, die 20-200 Gewichtsanteile an Zinkstaub und 0,05-0,5 Gewichtsanteile eines thermisch expandierenden Pulvers auf 10 Gewichtsanteile eines hauptsächlich aus Epoxydharz bestehenden Vehikels sowie 0,2-2,5 Gewichtsanteile eines Silan-Kopplungs-mittels vom Epoxy-Typ auf 100 Gewichtsanteile des Zinkstaubs enthält.

## Revendications

1. Un revêtement sur base de fer qui comprend un revêtement de poussière de zinc contenue dans une résine époxy pour former une couche de fond sur une base de fer après l'avoir dégraissée et grenaillée, le revêtement de poussière de zinc contenue dans une résine époxy étant formé d'une composition contenant 20-200 parties en poids de poussière de zinc et 0,05-0,5 partie en poids d'une poudre se dilatant thermiquement à 10 parties en poids d'un véhicule composé principalement de résine époxy, et 0,2-2,5 parties en poids d'un agent de pontage de silane du type époxy à 100 parties en poids de la poussière de zinc.

2. Un procédé de traitement de surface pour une base de fer qui comprend le dépôt d'une couche de fond en un revêtement de poussière de zinc contenue dans une résine époxy sur une base de fer après l'avoir dégraissée et grenaillée et l'application à celle-ci d'un autre revêtement en tant que revêtement de finition, le revêtement de poussière de zinc contenue dans une résine époxy étant formé d'une composition contenant 20-200 parties en poids de poussière de zinc et 0,05-0,5 partie en poids d'une poudre se dilatant thermiquement à 10 parties en poids d'un véhicule composé principalement de résine époxy, et 0,2-2,5 parties en poids d'un agent de pontage de silane du type époxy à 100 parties en poids de la poussière de zinc.

3. Un procédé de traitement de surface pour une pièce de fixation qui comprend le dépôt d'une couche de fond en un revêtement de poussière de zinc contenue dans une résine époxy sur la base de fer d'une pièce de fixation après l'avoir dégraissée et grenaillée, le revêtement de poussière de zinc contenue dans une résine époxy étant formé d'une composition contenant 20-200 parties en poids de poussière de zinc et 0,05-0,5 partie en poids d'une poudre se dilatant thermiquement à 10 parties en poids d'un véhicule composé principalement de résine époxy, et 0,2-2,5 parties en poids d'un agent de pontage de silane du type époxy à 100 parties en poids de la poussière de zinc.
